# FASCICULE DE BREVET EUROPEEN

(11) **EP 3 209 537 B1**
(45) Date de publication et mention de la délivrance du brevet: **22.05.2019**
(21) Numéro de dépôt: 15775761.8
(22) Date de dépôt: 08.09.2015
(51) Int. Cl.: B62D 25/02, B62D 25/20, B62D 21/15

(54) **LONGERON DE BAS DE CAISSE DE VÉHICULE AVEC RAIDISSEUR ET CLOISONS**
SEITENLEISTE EINES FAHRZEUGSEITENSCHWELLERS MIT VERSTEIFUNGSELEMENT UND TRENNWÄNDEN
SIDE RAIL OF VEHICLE ROCKER PANEL WITH STIFFENER AND PARTITIONS

(30) Priorité: 20.10.2014 FR 1460072
(43) Date de publication de la demande: 30.08.2017
(73) Titulaire: PSA Automobiles SA, 78300 Poissy (FR)
(72) Inventeur: FONFREDE, Stéphane, F-90000 Belfort (FR)
(86) Numéro de dépôt international: PCT/FR2015/052388
(87) Numéro de publication internationale: WO 2016/062930

(56) Documents cités:
- EP-A1- 2 014 539
- EP-A1- 2 030 872
- EP-A1- 2 216 237
- EP-A1- 2 412 612
- WO-A1-2013/150209
- DE-A1-102011 055 342
- US-A1- 2010 231 002

## Description

L'invention a trait au domaine des véhicules automobiles, plus particulièrement à la problématique de l'absorption d'un choc latéral d'un véhicule automobile. Plus particulièrement encore, l'invention a trait à une structure de plancher de véhicule. La structure de plancher avec bas de caisse de véhicule automobile varie généralement selon la réalisation des deux longerons latéraux de bas de caisse ainsi que la réalisation du plancher joignant les deux longerons. Il est connu de réaliser le plancher d'un véhicule automobile avec des traverses situées entre les longerons latéraux de bas de caisse. Ces traverses sont généralement le lieu de fixation des sièges avant du véhicule, elles rigidifient en particulier le plancher lors d'un choc latéral. Une telle structure de plancher est connue du document EP2014539.

Une structure de véhicule doit satisfaire à de nombreuses prestations notamment des tests de choc. Parmi ces tests il existe le test de choc latéral, notamment le test contre un poteau, qui impacte en particulier les longerons de bas de caisse du véhicule.

Il est donc souhaitable de réaliser une structure de plancher qui puisse absorber l'énergie d'un tel choc latéral.

Or un nouveau protocole de test de choc latéral consiste en ce que le véhicule rencontre un poteau à 32km/h avec un angle de choc de 75° par rapport à la direction longitudinale du véhicule. Ce protocole est plus sévère en ce qui concerne la vitesse de choc, il génère également de nouvelles formes de contraintes pour la structure, en particulier, de par la direction de choc qui est intermédiaire entre un choc frontal et un choc transversal.

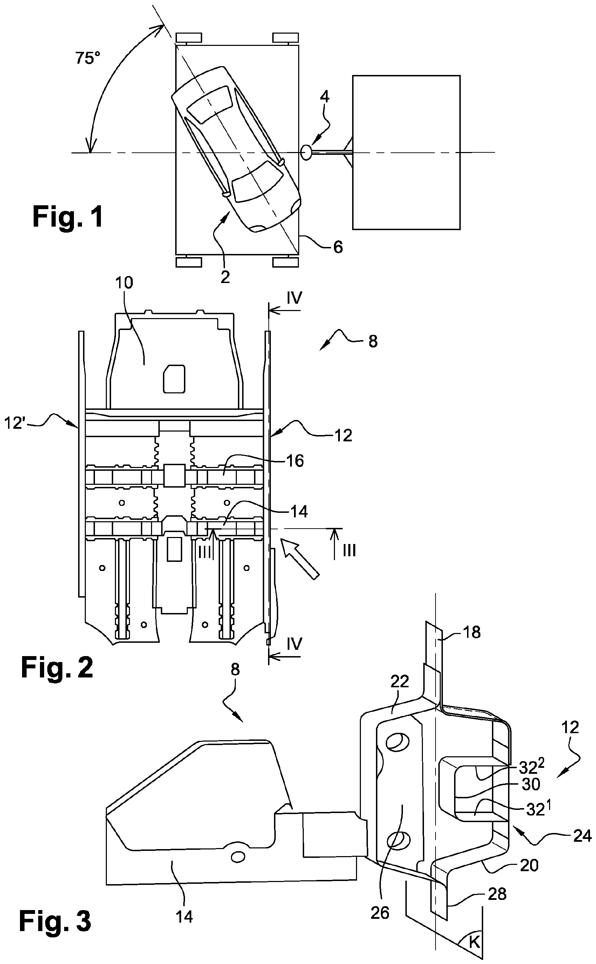

La figure 1 illustre un exemple des conditions d'un tel test de choc latéral d'un véhicule automobile 2 contre un poteau fixe 4. Lors de ce nouveau test, le véhicule 2 est monté sur une plateforme 6 lancée à 32 km/h contre le poteau 4, le véhicule 2 étant orienté de manière à former un angle de 75° avec la direction de déplacement de la plateforme, et positionné de façon à ce qu'il percute le poteau 4 au niveau du conducteur. La déformation de l'habitacle engendrant des risques importants de blessures, notamment au niveau du thorax ou de l'abdomen, le test vise à donner une notation, notamment en lien avec l'amplitude de la déformation du plancher ; les déchirures ou autres déboutonnages de points de soudure sont en particulier à éviter car ils augmentent généralement drastiquement l'amplitude de déformation.

Le document de brevet US 2010/0231002 A1 divulgue un plancher de véhicule automobile comprenant des longerons latéraux s'étendant longitudinalement ainsi que deux traverses joignant lesdits longerons. Les longerons comprennent un premier profilé longitudinal en forme de U tourné vers l'extérieur et dont l'âme joint les extrémités des traverses, un deuxième profilé longitudinal en U tourné vers l'intérieur avec des ailes de fixation soudées aux ailes correspondantes du premier profilé. La liaison de ces deux profilés en U forme un premier corps creux qui s'étend de l'avant vers l'arrière du longeron. Le longeron comprend, en outre une poutre longitudinale située à l'intérieur du corps creux susmentionné et formant un autre corps creux. Ce deuxième corps creux est arqué vers l'extérieur et soudé à ses extrémités à l'âme du premier profilé à niveau des traverses, elle peut être à proximité de l'âme du deuxième profilé en U, en particulier au niveau de la partie centrale de la poutre. Les flancs latéraux du véhicule comprennent également un renfort milieu comprenant un détecteur de choc latéral destiné à déclencher le fonctionnement d'un coussin gonflable ; le renfort milieu est fixé aux ailes de fixation du premier corps creux longitudinal. Cet enseignement est intéressant en ce qu'en cas de choc latéral le détecteur de choc est actionné sans délai par déformation du premier corps creux du longeron, le deuxième corps étant apte par sa raideur et sa forme arquée à transmettre de l'énergie du choc localement dans les traverses du plancher. L'absorption d'énergie du choc latéral sur un poteau est cependant limitée par la forme arquée du deuxième corps creux, en particulier pour les chocs latéraux au niveau des traverses.

L'invention a pour objectif de proposer une solution palliant au moins un des inconvénients de l'état de l'art susmentionné. Plus particulièrement l'invention a pour objectif de proposer une solution qui favorise l'absorption d'énergie du longeron en cas de choc latéral à 32 km/h avec un angle d'incidence de 75°.

L'invention a pour objet une structure de véhicule automobile avec un plancher et deux longerons latéraux de bas de caisse, chacun des longerons s'étendant dans une direction principale et comprenant : deux profilés principaux de section en U disposés avec leurs ouvertures en vis-à-vis suivant une direction horizontale, et fixés l'un à l'autre ; remarquable en ce que chacun des longerons comprend, en outre : un profilé raidisseur de section en U logé dans le longeron et avec des pattes de fixation aux extrémités du U fixées sur une face intérieure latérale du profilé principal situé du côté extérieur au plancher ; au moins une, préférentiellement plusieurs cloisons disposées transversalement dans le longeron entre le profilé raidisseur et une face intérieure latérale du profilé principal situé du côté du plancher.

Selon un mode avantageux de l'invention, les deux profilés principaux en U ont aux extrémités du U des pattes de fixation desdits profilés l'un à l'autre, et forment avec lesdites pattes au moins un plan de jonction généralement vertical, la ou les cloisons s'étendant depuis la face intérieure latérale du profilé principal situé du côté du plancher jusqu'audit plan de jonction.

Selon un mode avantageux de l'invention, la ou les cloisons s'étendant depuis la face intérieure latérale du profilé principal situé du côté du plancher jusqu'à une distance du plan de jonction inférieure à 20mm, préférentiellement inférieure à 15mm, plus préférentiellement inférieure à 10mm.

Selon un mode avantageux de l'invention, les deux profilés principaux en U ont aux extrémités du U des pattes de fixation desdits profilés l'un à l'autre, et forment avec lesdites pattes deux plans de jonction décalés mais généralement verticaux, la ou les cloisons s'étendant depuis la face intérieure latérale du profilé principal situé du côté du plancher jusqu'à un premier des deux plans de jonction décalés.

Selon un mode avantageux de l'invention, les deux profilés principaux ont aux extrémités du U des pattes de fixation desdits profilés l'un à l'autre, et forment avec lesdites pattes au moins un plan de jonction, le profilé raidisseur en U comprenant une âme située dans le plan de jonction ou à une distance dudit plan inférieure à 20mm, préférentiellement inférieure à 15mm, plus préférentiellement inférieure à 10mm.

Selon un mode avantageux de l'invention, le profilé raidisseur en U comprend une âme généralement verticale et deux semelles généralement horizontales.

Selon un mode avantageux de l'invention, le plancher comprend deux traverses s'étendant entre les deux longerons et destinées à supporter les sièges avant du véhicule, chacun des profilés raidisseurs et/ou les cloisons étant disposées majoritairement entre lesdites traverses.

Selon un mode avantageux de l'invention, les cloisons disposées transversalement dans le longeron comprennent une première cloison disposée à une distance de moins de 100mm de l'extrémité avant de chacun des profilés raidisseurs et une deuxième cloison disposée à une distance de moins de 100mm de l'extrémité arrière de chacun desdits profilés.

Selon un mode avantageux de l'invention, la structure comprend, en outre, deux montants médians s'étendant, chacun, essentiellement verticalement entre une position médiane sur chacun des deux longerons et le toit, et deux renforts de montants médians, une portion de chacun desdits renforts s'étendant longitudinalement sur le longeron en superposition avec le profilé raidisseur en U sur plus de 30%, préférentiellement plus de 40% de la longueur dudit profilé.

Selon un mode avantageux de l'invention, la structure comprend, en outre, un renfort arrière fixé à l'extrémité arrière de chacun des longerons et/ou un renfort de montant avant fixé à l'extrémité avant de chacun desdits longerons.

Selon un mode avantageux de l'invention, le profilé raidisseur est situé selon la direction principale du longeron, entre le renfort de pied avant et le renfort de montant médian.

Selon un mode avantageux de l'invention, chacun des profilés raidisseurs s'étend sur une longueur comprise entre 10% et 30% de la longueur entre les extrémités du longeron correspondant.

L'invention a également pour objet un véhicule comprenant une structure conforme à l'invention.

D'autres caractéristiques et avantages de la présente invention seront mieux compris à l'aide de la description et des dessins parmi lesquels :
- La figure 1 illustre un exemple de choc latéral contre un poteau à 75° et à 32km/h d'un véhicule automobile ;
- La figure 2 est une vue de dessus d'une structure avec un plancher et deux longerons de bas de caisse conforme à l'invention et dans un mode particulier de réalisation ;
- La figure 3 est une section transversale III-III d'un des longerons de la structure de la figure 2 au niveau d'une traverse et d'un montant médian ;
- La figure 4 est une section longitudinale IV-IV d'un des longerons de la structure de la figure 2 au niveau du raidisseur ;
- La figure 5 est une vue du côté extérieur d'un des longerons de la structure de la figure 2 ;

La figure 1 illustrant un exemple de choc latéral contre un poteau à 75° et à 32km/h d'un véhicule automobile 2 a été décrite précédemment dans la partie relative à l'état de la technique. Un tel véhicule peut être conforme à l'invention en ce qu'il comprend une structure conforme à l'invention.

La figure 2 est une vue de dessus d'une structure 8 de véhicule automobile dans un mode particulier de réalisation conforme à l'invention, l'avant de la structure 8 correspondant au bas de l'image. La structure 8 comprend un plancher 10 et deux longerons 12 et 12' de bas de caisse situés latéralement de chaque côté du plancher. Le plancher 10 comprend, en outre, deux traverses 14 et 16 s'étendant entre les deux longerons 12 et 12' et destinées à supporter les sièges avant du véhicule. En l'occurrence, le plancher 10 comprend un tunnel central destiné à recevoir une conduite d'échappement s'étendant longitudinalement par le dessous du plancher, les deux traverses 14 et 16 s'étendant dans le plancher 10 de chaque côté du tunnel central. Par souci de simplification, seules les traverses sur l'image à droite du tunnel comprennent des références numériques, la description ci-après est cependant valable pour les deux traverses représentés sur l'image à gauche du tunnel. Chacune des traverses 14 et 16 dans ce mode de réalisation est fixée au longeron 12 à l'une de ses extrémités et au tunnel central à l'autre de ses extrémités. Une flèche à droite de l'image illustre le point de choc du poteau contre la structure 8 du véhicule. Le choc se passe au niveau du passager avant assis sur un siège fixé aux deux traverses 14 et 16 du plancher 10 de l'un ou de l'autre côté du tunnel central. Le tunnel central ici présenté et qui implique une réalisation particulière des traverses, ne limite cependant en rien la portée de l'invention à un plancher comprenant des traverses s'étendant directement entre les deux longerons 12 et 12'.

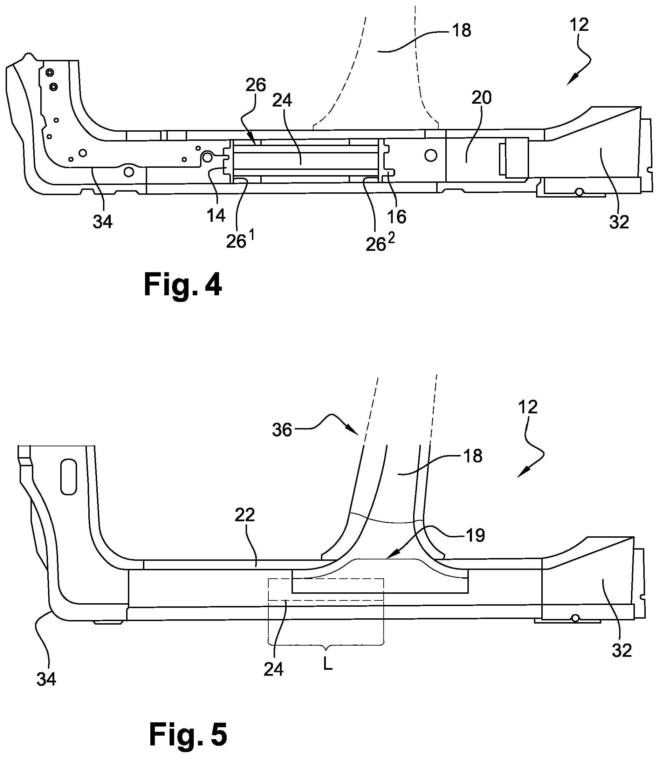

La figure 3 est une section transversale du longeron 12 des deux longerons d'une structure 8 conforme à l'invention et dans le mode particulier de réalisation de l'invention introduit en relation avec la figure précédente. La section est en l'occurrence à niveau d'une 14 des traverses de la structure 8, celle que l'on peut voir à gauche de l'image. On peut observer dans cette section un renfort 18 de montant médian, ou plus couramment dénommé un renfort 18 de « pied milieu », ledit montant médian (non représenté) joignant verticalement une partie médiane du longeron au toit (non représenté) du véhicule automobile. Le renfort de pied milieu 18 est abordé plus en détail en relation avec la figure 5 en ce qui concerne sa fixation au longeron 12. Le longeron 12 à droite de l'image s'étend dans une direction principale et comprend deux profilés principaux 20 et 22 de section en U disposés avec leurs ouvertures en vis-à-vis suivant une direction horizontale, et fixés l'un à l'autre. Le longeron 12 comprend, en outre, un profilé raidisseur 24 de section en U logé dans le longeron 12 entre les profilés principaux 20 et 22. Plus précisément, le raidisseur 24 en U comprend aux extrémités du U des pattes de fixation qui sont fixées sur une face intérieure latérale du profilé principal 20 situé du côté extérieur au plancher. Le longeron 12 comprend, en outre, plusieurs cloisons 26 disposées transversalement dans le longeron 12 entre le profilé raidisseur 24 en U et une face intérieure latérale du profilé principal 22 situé du côté du plancher. Les deux profilés principaux 20 et 22 en U ont aux extrémités du U des pattes de fixation 28 de ces profilés l'un à l'autre, ces pattes formant un plan de jonction vertical « K ». Les cloisons 26 peuvent s'étendre depuis la face intérieure latérale du profilé principal 22 situé du côté du plancher jusqu'au plan de jonction «K». En l'occurrence, les cloisons 26 s'étendent jusqu'à une distance du plan de jonction inférieure à 20mm, préférentiellement inférieure à 15mm, plus préférentiellement inférieure à 10mm. Le profilé raidisseur 24 en U comprend une âme 30 qui peut être située dans le plan de jonction. En l'occurrence, l'âme 30 est située à une distance du plan de jonction « K » inférieure à 20mm, préférentiellement inférieure à 15mm, plus préférentiellement inférieure à 10mm. On peut observer que l'âme 30 du raidisseur 24 ainsi que les âmes des profilés principaux 20 et 22 sont verticales.

Enfin, les semelles 32¹ et 32² du raidisseur 24 en U sont horizontales. Cette mesure est intéressante de façon à ce que les semelles 32¹ et 32² du profilé raidisseur 24 s'étendant dans la direction principale du longeron puissent absorber en flexion l'énergie de choc contre le poteau. Dans ce mode particulier de réalisation, on peut observer deux cloisons 26 à niveau de la traverse 14 du plancher. Cette mesure est également intéressante de manière à rigidifier la structure, en effet le raidisseur et les cloisons sont aptes à absorber et transmettre l'énergie du choc, en particulier à niveau ou le plancher est renforcé avec la traverse 14. On peut également observer que la traverse 14 est fixée au longeron 12.

La figure 4 est une section longitudinale IV-IV d'un 12 des deux longerons de la structure conforme à l'invention et dans le mode de réalisation introduit aux deux figures précédentes. On peut voir le longeron 12 avec un 20 des profilés principaux, le raidisseur 24 s'étendant dans la direction principale du longeron, les cloisons 26 s'étendant transversalement dans le longeron. Les cloisons 26 disposées transversalement dans le longeron comprennent une première cloison 26¹ disposée à une distance de moins de 100mm de l'extrémité avant du profilé raidisseur 24 et une deuxième cloison 26² disposée à une distance de moins de 100mm de l'extrémité arrière du profilé raidisseur 24. Cette mesure est intéressante pour le travail en flexion du raidisseur 24 entre les cloisons 26¹ et 26² situées aux extrémités dudit raidisseur 24. Le profilé raidisseur 24 et/ou les cloisons 26, 26¹ et 26² sont disposées majoritairement entre les traverses 14 et 16, on peut voir dans le mode particulier de réalisation présenté que le raidisseur 24 s'étend jusqu'au niveau des traverses 14 et 16 du plancher et qu'un couple de cloisons est disposé à chacune des extrémités du raidisseur. Ce mode de réalisation particulier présente quatre cloisons, cela ne limite cependant en rien l'invention et le nombre de cloisons 26 réalisées dans le longeron 12. Le longeron 12 comprend, en outre, un renfort arrière 32 fixé à l'extrémité arrière du longeron ainsi qu'un renfort de pied avant 34 fixé à l'extrémité avant du longeron 12, le profilé raidisseur 24 est situé selon la direction principale du longeron, entre les renforts avant 34 et le renfort pied milieu 18 (représenté en pointillé sur l'image car en arrière de cette section) et il s'étend sur une longueur comprise entre 10% et 30% de la longueur entre les extrémités du longeron au bout des renforts arrière 32 et avant 34.

La figure 5 est une vue d'un côté extérieur d'un 12 des longerons d'une structure conforme à l'invention et dans le mode particulier de réalisation présenté dans cet exposé. La structure comprend, en outre, un montant médian 36 (représenté schématiquement en pointillé), ou pied milieu, s'étendant essentiellement verticalement entre une position médiane sur le longeron 12 et le toit (non représenté), un renfort pied milieu 18 comprenant une portion 19 s'étendant longitudinalement sur le longeron 12 en superposition avec le profilé raidisseur 24 en U. La superposition longitudinale entre la portion 19 du renfort pied milieu 18 et le profilé raidisseur 24 peut s'étendre sur plus de 30%, préférentiellement plus de 40% de la longueur L du profilé raidisseur 24.

## Revendications

1. Structure (8) de véhicule automobile avec un plancher (10) et deux longerons latéraux (12 ; 12') de bas de caisse, le plancher (10) comprenant deux traverses (14 ; 16) qui s'étendent entre les deux longerons (12 ; 12') et qui sont destinées à supporter les sièges avant du véhicule, chacun desdits longerons (12 ; 12') s'étendant dans une direction principale et comprenant :
- deux profilés principaux (20 ; 22) de section en U disposés avec leurs ouvertures en vis-à-vis suivant une direction horizontale, et fixés l'un à l'autre ;
- un profilé raidisseur (24) de section en U logé dans le longeron (12, 12') et avec des pattes de fixation aux extrémités du U fixées sur une face intérieure latérale du profilé principal (20) ; et
- plusieurs cloisons (26) disposées transversalement dans le longeron (12 ; 12') entre le profilé raidisseur (24) et une face intérieure latérale du profilé principal (22),
**caractérisée en ce que** le profilé raidisseur (24) est situé du côté extérieur au plancher (10), lesdites cloisons (26) étant situées du côté du plancher et **en ce qu'**au moins deux desdites cloisons (26) sont positionnées dans le prolongement de chacune des deux traverses (14 ; 16), les deux extrémités du profil raidisseur (24) s'étendant jusqu'au niveau des deux traverses (14 ; 16), en bordure des deux cloisons (26).

2. Structure (8) de véhicule automobile selon la revendication 1, **caractérisée en ce que** les deux profilés principaux en U (20 ; 22) ont aux extrémités du U des pattes de fixation (28) desdits profilés l'un à l'autre, et forment avec lesdites pattes (28) au moins un plan de jonction (K) généralement vertical, la ou les cloisons (26) s'étendant depuis la face intérieure latérale du profilé principal (22) situé du côté du plancher jusqu'audit plan de jonction (K).

3. Structure (8) de véhicule selon l'une des revendications 1 et 2, **caractérisée en ce que** les deux profilés principaux (20 ; 22) ont aux extrémités du U des pattes de fixation (28) desdits profilés l'un à l'autre, et forment avec lesdites pattes au moins un plan de jonction (K), le profilé raidisseur (24) en U comprenant une âme (30) située dans le plan de jonction (K) ou à une distance dudit plan inférieure à 20mm, préférentiellement inférieure à 15mm, plus préférentiellement inférieure à 10mm.

4. Structure (8) de véhicule selon l'une des revendications 1 à 3, **caractérisée en ce que** le profilé raidisseur (24) en U comprend une âme (30) généralement verticale et deux semelles (32¹, 32²) généralement horizontales.

5. Structure (8) de véhicule selon l'une des revendications 1 à 4, **caractérisée en ce que** les cloisons (26) disposées transversalement dans le longeron (12 ; 12') comprennent une première cloison (26¹) disposée à une distance de moins de 100mm de l'extrémité avant de chacun des profilés raidisseurs (24) et une deuxième cloison (26²) disposée à une distance de moins de 100mm de l'extrémité arrière de chacun desdits profilés (24).

6. Structure (8) de véhicule selon l'une des revendications 1 à 5, **caractérisée en ce qu'**elle comprend, en outre, deux montants médians (36) s'étendant, chacun, essentiellement verticalement entre une position médiane sur chacun des deux longerons (12 ; 12') et le toit, et deux renforts (18) de montants médians, une portion (19) de chacun desdits renforts (18) s'étendant longitudinalement sur le longeron en superposition avec le profilé raidisseur (24) en U sur plus de 30%, préférentiellement plus de 40% de la longueur (L) dudit profilé (24).

7. Structure (8) de véhicule selon la revendication 6, **caractérisée en ce qu'**elle comprend, en outre, un renfort arrière (32) fixé à l'extrémité arrière de chacun des longerons (12 ; 12') et/ou un renfort (34) de pied avant fixé à l'extrémité avant de chacun desdits longerons (12 ; 12').

8. Structure (8) de véhicule selon la revendication 7, **caractérisée en ce que** le profilé raidisseur (24) est situé selon la direction principale du longeron (12 ; 12'), entre le renfort (34) de pied avant et le renfort (18) de montant médian.

9. Structure (8) de véhicule selon l'une des revendications 1 à 8, **caractérisée en ce que** chacun des profilés raidisseurs (24) s'étend sur une longueur comprise entre 10% et 30% de la longueur entre les extrémités du longeron (12 ; 12') correspondant.

## Patentansprüche

1. Kraftfahrzeugstruktur (8) mit einem Fußboden (10) und zwei Seitenleisten (12; 12') eines Fahrzeugseitenschwellers, wobei der Fußboden (10) zwei Querträger (14; 16) umfasst, die sich zwischen den zwei Seitenleisten (12; 12') erstrecken und dazu bestimmt sind, die Vordersitze des Fahrzeugs zu tragen, wobei sich jede der Seitenleisten (12; 12') in eine Hauptrichtung erstreckt und Folgendes umfasst:
- zwei Hauptprofile (20; 22) mit U-Querschnitt, die mit ihren Öffnungen in Gegenüberlage entlang einer horizontalen Richtung angeordnet und aneinander befestigt sind;
- ein Versteifungsprofil (24) mit U-Querschnitt, das in der Seitenleiste (12, 12') aufgenommen ist und mit Befestigungspratzen an den Enden des U, die auf einer seitlichen inneren Fläche des Hauptprofils (20) befestigt sind; und
- mehrere Wände (26), die quer in der Seitenleiste (12; 12') zwischen dem Versteifungsprofil (24) und einer seitlichen inneren Fläche des Hauptprofils (22) angeordnet sind,
**dadurch gekennzeichnet, dass** das Versteifungsprofil (24) auf der Seite außerhalb des Fußbodens (10) liegt, wobei die Wände (26) auf der Seite des Fußbodens liegen, und dass mindestens zwei der Wände (26) in der Verlängerung jedes der zwei Querträger (14; 16) positioniert sind, wobei sich die zwei Enden des Versteifungsprofils (24) bis zu dem Bereich der zwei Querträger (14; 16) am Rand der zwei Wände (26) erstrecken.

2. Kraftfahrzeugstruktur (8) nach Anspruch 1, **dadurch gekennzeichnet, dass** die zwei Hauptprofile in U (20; 22) an den Enden des U Pratzen (28) zum Befestigen der Profile aneinander aufweisen und mit den Pratzen (28) mindestens eine Verbindungsebene (K), die im Allgemeinen vertikal ist, bilden, wobei sich die Wand oder die Wände (26) von der seitlichen inneren Fläche des Hauptprofils (22), die auf der Seite des Fußbodens liegt, bis zu der Verbindungsebene (K) erstrecken.

3. Fahrzeugstruktur (8) nach einem der Ansprüche 1 und 2, **dadurch gekennzeichnet, dass** die zwei Hauptprofile (20; 22) an den Enden des U Pratzen (28) zum Befestigen der Profile aneinander aufweisen und mit den Pratzen mindestens eine Verbindungsebene (K) bilden, wobei das Versteifungsprofil (24) in U eine Seele (30) umfasst, die in der Verbindungsebene (K) oder in einem Abstand von der unteren Ebene von 20 mm, bevorzugt kleiner als 15 mm, am besten kleiner als 10 mm umfasst.

4. Fahrzeugstruktur (8) nach einem der Ansprüche 1 bis 3, **dadurch gekennzeichnet, dass** das Versteifungsprofil (24) in U eine im Allgemeinen vertikale Seele (30) und zwei im Allgemeinen horizontale Sohlen (32¹, 32²) umfasst.

5. Fahrzeugstruktur (8) nach einem der Ansprüche 1 bis 4, **dadurch gekennzeichnet, dass** die Wände (26), die quer in der Seitenleiste (12; 12') angeordnet sind, eine erste Wand (26¹) umfassen, die in einem Abstand von mindestens 100 mm von dem vorderen Ende jedes der Versteifungsprofile (24) angeordnet ist, und eine zweite Wand (26²), die in einem Abstand von mindestens 100 mm von dem hinteren Ende jedes der Profile (24) angeordnet ist.

6. Fahrzeugstruktur (8) nach einem der Ansprüche 1 bis 5, **dadurch gekennzeichnet, dass** sie außerdem zwei Mittenständer (36) umfasst, die sich jeweils im Wesentlichen vertikal zwischen einer Mittenposition auf jeder der zwei Seitenleisten (12; 12') und dem Dach erstrecken, und zwei Mittenständerverstärkungen (18), wobei sich ein Abschnitt (19) jeder der Verstärkungen (18) längs auf der Längsleiste in Überlagerung mit dem Versteifungsprofil (24) in U auf mehr als 30 %, bevorzugt mehr als 40 % der Länge (L) des Profils (24) erstreckt.

7. Fahrzeugstruktur (8) nach Anspruch 6, **dadurch gekennzeichnet, dass** sie außerdem eine hintere Verstärkung (32) umfasst, die an dem hinteren Ende jeder der Leisten (12; 12') befestigt ist, und/oder eine Verstärkung (34) eines vorderen Fußes, die an dem vorderen Ende jeder der Seitenleisten (12; 12') befestigt ist.

8. Fahrzeugstruktur (8) nach Anspruch 7, **dadurch gekennzeichnet, dass** das Versteifungsprofil (24) entlang der Hauptrichtung der Leiste (12; 12') zwischen der Verstärkung (34) des vorderen Fußes und der Mittenständerverstärkung (18) liegt.

9. Fahrzeugstruktur (8) nach einem der Ansprüche 1 bis 8, **dadurch gekennzeichnet, dass** sich jedes der Versteifungsprofile (24) auf einer Länge zwischen 10 % und 30 % der Länge zwischen den Enden der entsprechenden Leiste (12; 12') erstreckt.

## Claims

1. A motor vehicle structure (8) with a floor (10) and two rocker panel side rails (12; 12'), the floor (10) including two cross members (14; 16) which extend between the two side rails (12; 12') and which are intended to support the front seats of the vehicle, each of said side rails (12; 12') extending in a main direction and including:
- two main profile members (20; 22) with a U-shaped cross-section, arranged with their openings opposite one another along a horizontal direction, and attached to one another;
- a stiffening profile member (24) with a U-shaped cross-section housed in the side rail (12; 12') and with tabs for attachment to the ends of the U attached to an inner lateral surface of the main profile member (20); and
- a plurality of partitions (26) arranged transversely in the side rail (12; 12') between the stiffening profile member (24) and an inner lateral surface of the main profile member (22),
**characterized in that** the stiffening profile member (24) is situated on the side exterior to the floor (10), said partitions (26) being situated on the side of the floor and **in that** at least two of said partitions (26) are positioned in the extension of each of the two cross members (14; 16), the two ends of the stiffening profile member (24) extending up to the level of the two cross members (14; 16), at the edge of the two partitions (26).

2. The motor vehicle structure (8) according to Claim 1, **characterized in that** the two main U-shaped profile members (20; 22) have, at the ends of the U, tabs (28) for attachment of said profile members to one another, and form with said tabs (28) at least one generally vertical junction plane (K), the partitions(s) (26) extending from the inner lateral surface of the main profile member (22) situated on the side of the floor up to said junction plane (K).

3. The vehicle structure (8) according to one of Claims 1 and 2, **characterized in that** the two main profile members (20; 22) have, at the end of the U, tabs (28) for attachment of said profile members to one another, and form with said tabs at least one junction plane (K), the U-shaped stiffening profile member (24) including a core (30) situated in the junction plane (K) or at a distance from said plane less than 20mm, preferably less than 15mm, more preferably less than 10mm.

4. The vehicle structure (8) according to one of Claims 1 to 3, **characterized in that** the U-shaped stiffening profile member (24) includes a generally vertical core (30) and two generally horizontal baseplates (32¹, 32²).

5. The vehicle structure (8) according to one of Claims 1 to 4, **characterized in that** the partitions (26) disposed transversely in the side rail (12' 12') include a first partition (26¹) disposed at a distance of less than 100mm from the front end of each of the stiffening profile members (24) and a second partition (26²) disposed at a distance of less than 100mm from the rear end of each of said profile members (24).

6. The vehicle structure (8) according to one of Claims 1 to 5, **characterized in that** it includes, furthermore, two median uprights (36), each extending essentially vertically between a median position on each of the two side rails (12; 12') and the roof, and two reinforcements (18) of median uprights, a portion (19) of each of said reinforcements (18) extending longitudinally on the side rail in superposition with the U-shaped stiffening profile member (24) over more than 30%, preferably more than 40% of the length (L) of said profile member (24).

7. The vehicle structure (8) according to Claim 6, **characterized in that** it includes, furthermore, a rear reinforcement (32) attached to the rear end of each of the side rails (12' 12') and/or a front pillar reinforcement (34) attached to the front end of each of said side rails (12; 12').

8. The vehicle structure (8) according to Claim 7, **characterized in that** the stiffening profile member (24) is situated along the main direction of the side rail (12; 12'), between the front pillar reinforcement (34) and the median upright reinforcement (18).

9. The vehicle structure (8) according to one of Claims 1 to 8, **characterized in that** each of the stiffening profile members (24) extends over a length comprised between 10% and 30% of the length between the ends of the corresponding side rail (12; 12').
